# EUROPÄISCHE PATENTSCHRIFT

(11) **EP 2 237 998 B1**
(45) Veröffentlichungstag und Bekanntmachung des Hinweises auf die Patenterteilung: **18.06.2014**
(21) Anmeldenummer: 08871483.7
(22) Anmeldetag: 11.11.2008
(51) Int. Cl.: B60S 1/04

(54) **GETRIEBEGEHÄUSE EINER WISCHERANLAGE MIT EINEM STECKPUNKT ALS BEFESTIGUNGSPUNKT**
GEAR HOUSING OF A WIPER SYSTEM HAVING A PLUG-IN POINT AS A FASTENING POINT
CARTER D'ENGRENAGE D'UN SYSTÈME ESSUIE-GLACE AVEC UN POINT D'EMBOÎTEMENT COMME POINT DE FIXATION

(30) Priorität: 25.01.2008 DE 102008006027
(43) Veröffentlichungstag der Anmeldung: 13.10.2010
(73) Patentinhaber: Robert Bosch GmbH, 70442 Stuttgart (DE)
(72) Erfinder: MAIER, Gerald, 77833 Ottersweier-Unzhurst (DE); LAURENT, Stephane, F-67100 Strasbourg (FR); WEGNER, Norbert, 77815 Buehl (DE)
(86) Internationale Anmeldenummer: PCT/EP2008/065293
(87) Internationale Veröffentlichungsnummer: WO 2009/092467

(56) Entgegenhaltungen:
- WO-A-2005/025951
- WO-A-2005/097565
- FR-A- 2 859 403
- FR-A- 2 887 830
- JP-A- 60 042 121
- US-A- 2 270 589

## Beschreibung

### Stand der Technik

Die Erfindung betrifft ein Getriebegehäuse einer Wischeranlage mit einem Steckpunkt als Befestigungspunkt zum Befestigen der Wischeranlage an einem Fahrzeug.

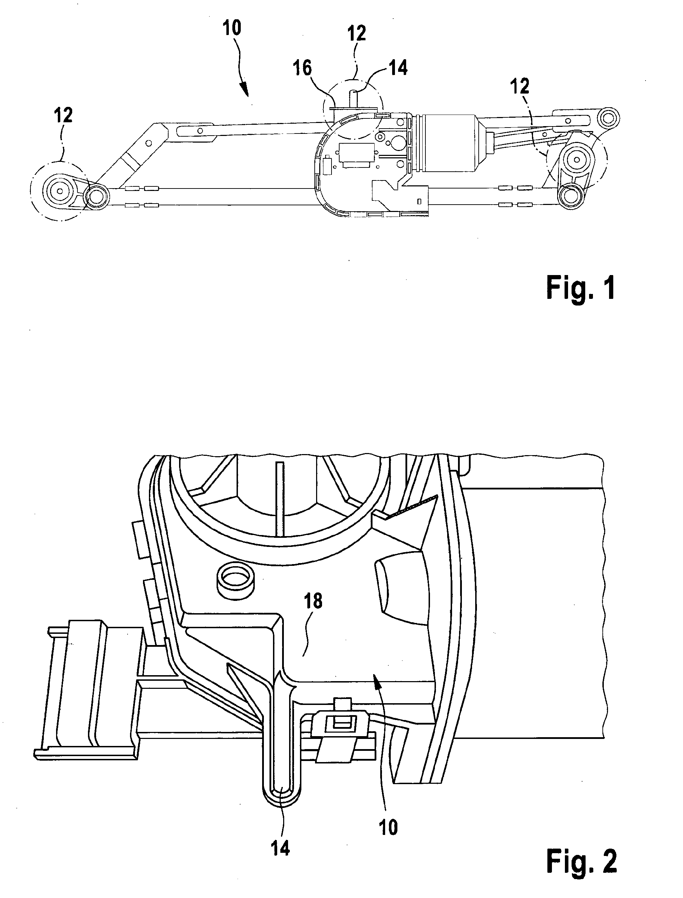

Aus dem Stand der Technik ist allgemein bekannt, eine Frontwischeranlage mit mehreren Befestigungspunkten zu versehen, darunter einem Steckpunkt zum Fixieren der Frontwischeranlage an einem Fahrzeug. Ein solcher Steckpunkt ist dabei, wie im nachfolgenden noch näher anhand der Fig. 1 und 2 erläutert wird, hierbei entweder an der Platine der Wischeranlage oder direkt an deren Motor integriert. Dies hat jedoch den Nachteil, dass wenn beispielsweise ein Kunde einen solchen Steckpunkt an einer anderen Position oder überhaupt nicht wünscht eine solche Änderung mit zusätzlichen Kosten verbunden ist.

Die Offenlegungsschrift WO 2005/025951 A1 zeigt eine gattungsgemäße Scheibenwischervorrichtung für ein Kraftfahrzeug. Die Vorrichtung umfasst ein Getriebegehäuse, welches mittels Entkopplungselemente an der Fahrzeugkarosserie befestigt wird. Hierbei weisen die Entkopplungselemente Gewindeschrauben zwecks Verschraubung der Entkopplungselemente an der Fahrzeugkarosserie auf.

Die Offenlegungsschrift FR 2887830 A zeigt eine Scheibenwischervorrichtung mit einem Gehäuse umfassend drei Befestigungsarme, welche an einer Fahrzeugkarosserie befestigt werden.

Die Offenlegungsschrift JP 60042121 A zeigt ein Getriebegehäuse einer Wischeranlage, wobei das Gehäuse mittels stufenförmiggewinkelter Bauteile an einer Fahrzeugkarosserie befestigt ist.

Die Offenlegungsschrift WO 2005/097565 A1 zeigt eine Scheibenwischvorrichtung mit mindestens einem an einer Fahrzeugkarosserie befestigbaren Antriebselement und mindestens zwei axial starr angeordneten Befestigungselementen, die in Aufnahmeöffnungen an der Fahrzeugkarosserie einzugreifen vermögen.

Die Patentschrift US 2,270,589 zeigt ein Getriebegehäuse einer Wischeranlage, welches an einem doppelwandigen Verstärkungselement einer Karosserie angeschraubt ist.

Die Offenlegungsschrift FR 2859403 zeigt ein Werkzeug zur Befestigung einer Wischeranlage an einer Fahrzeugkarosserie.

Gemäß der Erfindung wird daher ein Getriebegehäuse für eine Wischeranlage bereitgestellt, wobei das Getriebegehäuse mit wenigstens einem Steckpunkt versehen ist, zur Befestigung an einem Fahrzeug. Der Steckpunkt ist dabei als getrenntes bzw. separates Teil an dem Getriebegehäuse befestigbar. Auf diese Weise kann ein Steckpunkt beispielsweise leicht an verschiedenen Positionen des Getriebegehäuses nachträglich befestigt werden oder ganz weggelassen werden, je nach Kundenanforderung. Dadurch sind nicht wie im Stand der Technik beispielsweise verschiedene Spritzwerkzeuge für das Getriebegehäuse notwendig, wenn sich Variationen bei dem Steckpunkt ergeben.

Erfindungsgemäß weist der Steckpunkt einen Verbindungsabschnitt auf, mit welcher der Steckpunkt mit dem Getriebegehäuse verbunden bzw. daran befestigt werden kann. Des Weiteren weist der Steckpunkt einen Befestigungsabschnitt auf, beispielsweise einen Stiftabschnitt, um an einem Fahrzeug befestigt zu werden bzw. daran aufgesteckt zu werden. Hierzu kann der Verbindungsabschnitt beispielsweise als Schraubenabschnitt mit einem Gewinde ausgebildet sein, wobei der Schraubenabschnitt z.B. einen selbstfurchenden Schraubenabschnitt bilden kann.

Erfindungsgemäß ist das Getriebegehäuse zusätzlich mit wenigstens einer Aufnahme versehen, um den Verbindungsabschnitt des Steckpunkts darin einzuführen und wahlweise darin beispielsweise zu verrasten, zu verklemmen und/oder zu verkleben. Auf diese Weise kann ein Steckfuß auch an Stellen befestigt werden, wo er zuvor nicht einfach angeschraubt werden könnte.

Erfindungsgemäß besteht die Aufnahme beispielsweise aus zwei L-förmigen Führungen. Alternativ kann die Aufnahme auch U-förmig ausgebildet sein, um zwei Führungen bereitzustellen, in welche ein entsprechend geformter Verbindungsabschnitt einführbar ist. Auf diese Weise kann ein Verbindungsabschnitt sicher in der Aufnahme gehalten werden, ohne ungewollt zu verrutschen. Außerdem ist ein Steckpunkt in einer solche Aufnahme leicht zu montieren.

In einer nicht zur Erfindung gehörenden Ausführungsform ist der Verbindungsabschnitt als abgeflachter Abschnitt ausgebildet. Der abgeflachte Abschnitt weist dabei wenigstens ein oder zwei Öffnungen auf, in welche ein Niet, ein Bolzen oder eine Schraube eingeführt werden kann, um den Verbindungsabschnitt an dem Getriebegehäuse mittels Nieten, Verbolzen oder Verschrauben zu befestigen. Als Schrauben können dabei beispielsweise selbstfurchende Schrauben verwendet werden.

Gemäß einer weiteren, nicht zur Erfindung gehörenden Ausführungsform ist der Verbindungsabschnitt mit einem Hakenelement ausgebildet. Das Getriebegehäuse ist hierbei mit einer entsprechenden Vertiefung bzw. einem Schacht ausgebildet, in welche das Hakenelement einhakbar ist. Dies hat den Vorteil, dass der Steckpunkt sehr einfach montiert werden kann.

In einer weiteren, nicht zur Erfindung gehörenden Ausführungsform sind der Verbindungsabschnitt und der Befestigungsabschnitt als Stiftelement bzw. zylinderförmig ausgebildet. Hierbei ist an dem Getriebegehäuse eine entsprechende Aufnahme vorgesehen, in welche der Verbindungsabschnitt einrasten kann. Der Steckpunkt hat hierbei den Vorteil, dass er durch seinen einfachen Aufbau leicht und kostengünstig herstellbar ist.

Gemäß einer nicht zur Erfindung gehörenden Ausführungsform weist der Verbindungsabschnitt zwei nach vorne gebogene Enden auf, so dass der Verbindungsabschnitt eine U-Form bildet. Die beiden Enden des Verbindungsabschnitts werden in entsprechende Führungen einer Rastaufnahme eingeführt und beispielsweise darin eingerastet. Die Rastaufnahme mit dem Steckpunkt wird wiederum an dem Getriebegehäuse eingerastet. Hierzu weist die Rastaufnahme einen entsprechenden Rasthaken auf, der an einer Gehäusewand des Getriebegehäuses einrasten kann. Dies hat den Vorteil, dass ein Steckpunkt sehr einfach an verschiedenen Positionen am Getriebegehäuse befestigt werden kann, je nach Kundenwunsch.

Ausführungsformen des Getriebegehäuses werden nachstehend anhand der schematischen Figuren der Zeichnung näher erläutert. Es zeigt:
Fig. 1 eine Frontwischeranlage mit drei Befestigungspunkten zur Befestigung am Fahrzeug gemäß dem Stand der Technik;
Fig. 2 einen Ausschnitt eines Steckpunkts als Befestigungspunkt, der an einem Motor einer Wischeranlage vorgesehen ist, gemäß dem Stand der Technik;
Fig. 3 ein Getriebegehäuse einer Frontwischeranlage mit einem Steckpunkt gemäß einer nicht zur Erfindung gehörenden Ausführungsform;
Fig. 4 einen Ausschnitt einer Befestigung eines Steckpunkts an einem Getriebegehäuse gemäß der Erfindung;
Fig. 5 ein Getriebegehäuse mit einem Steckpunkt gemäß der Erfindung;
Fig. 6 ein Getriebegehäuse mit einem Steckpunkt gemäß einer nicht zur Erfindung gehörenden Ausführungsform;
Fig. 7 ein Getriebegehäuse einer Frontwischeranlage mit einem Steckpunkt gemäß einer weiteren nicht zur Erfindung gehörenden Ausführungsform;
Fig. 8 eine Seitenansicht eines Ausschnitts eines Getriebegehäuses mit einem Steckpunkt gemäß einer nicht zur Erfindung gehörenden Ausführungsform;
Fig. 9 das Getriebegehäuse gemäß Fig. 8 wobei der Steckpunkt mit dem Getriebegehäuse verbunden ist;
Fig. 10 ein Ausschnitt eines, nicht beanspruchten Getriebegehäuses;
Fig. 11 ein Ausschnitt eines Getriebegehäuses gemäß Fig.10; und
Fig. 12 ein weiteres, nicht zur Erfindung gehörendes Getriebegehäuse.

In allen Figuren sind gleiche bzw. funktionsgleiche Elemente und Vorrichtungen - sofern nichts anderes angegeben ist - mit denselben Bezugszeichen versehen worden.

Fig. 1 ist eine Frontwischeranlage 10 für ein Fahrzeug dargestellt gemäß dem Stand der Technik. Die Frontwischeranlage 10 weist hierbei drei Befestigungspunkte 12 auf, mit denen die Frontwischeranlage 10 in dem jeweiligen Fahrzeug befestigt wird. Der Dritte der Befestigungspunkte 12, wie er in Fig. 1 dargestellt ist, ist dabei häufig als Steckpunkt 14 ausgebildet, um an einer entsprechenden Stelle des Fahrzeugs aufgesteckt zu werden und so die Frontwischeranlage 10 daran zu befestigen. Der Steckpunkt 14 ist dabei gemäß dem Stand der Technik, wie er in Fig. 1 gezeigt ist, in einer Platine 16 der Frontwischeranlage 10 integriert.

In einer weiteren Ausführungsform einer Frontwischeranlage 10 gemäß dem Stand der Technik, wie sie in Fig. 2 gezeigt ist, ist der Steckpunkt 14 am Motor integriert. Der Steckpunkt 14 ist hierbei an dem Motor einstückig ausgebildet, wie in dem Ausschnitt in Fig. 2 gezeigt ist.

Eine solche Konstruktion, bei welcher der Steckpunkt 14 im Getriebegehäuse 18 eingespritzt ist, wie in Fig. 2 gezeigt ist, hat die folgenden Nachteile. Ein Basismotorkonzept mit einem solchen eingespritzten Steckpunkt 14 ist nicht tragfähig, wenn der Basismotor für verschiedene Kunden verwendet werden soll, bei welchen die Positionen für den Steckpunkt 14 variieren oder bei welchen ein solcher Steckpunkt 14 nicht erwünscht ist oder nicht gebraucht wird. Unterschiedliche Positionen für den Steckpunkt 14 oder das Vorsehen keines Steckpunktes 14 führt des Weiteren dazu, dass unterschiedliche Spritzwerkzeuge notwendig sind, um ein Getriebegehäuse 18 des Motors mit oder ohne den gewünschten Steckpunkt 14 bereitzustellen. Daraus resultiert außerdem die Notwendigkeit Werkstückträger und Fertigungslinien an die verschiedenen Positionen der Steckpunkte 14, je nach Kundenanforderung, anzupassen. Außerdem ist ein erhöhter Verpackungsaufwand und Platzbedarf notwendig, so dass insgesamt die Fertigungskosten für eine Wischeranlage steigen.

Gemäß der Erfindung wird der Steckpunkt 14 daher nicht einstückig mit dem Getriebegehäuse 18 ausgebildet, bzw. an diesem angespritzt sondern an diesem als separates Teil befestigt. Mit anderen Worten, der Steckpunkt 14 wird nachträglich an dem jeweiligen Getriebegehäuse 18 des Motors der Wischeranlage befestigt. Dies kann auf die verschiedensten Arten erfolgen, beispielsweise mittels Schrauben, Verprägen bzw. Verstemmen, Verklemmen und/oder Verrasten usw., um nur einige Beispiele zu nennen.

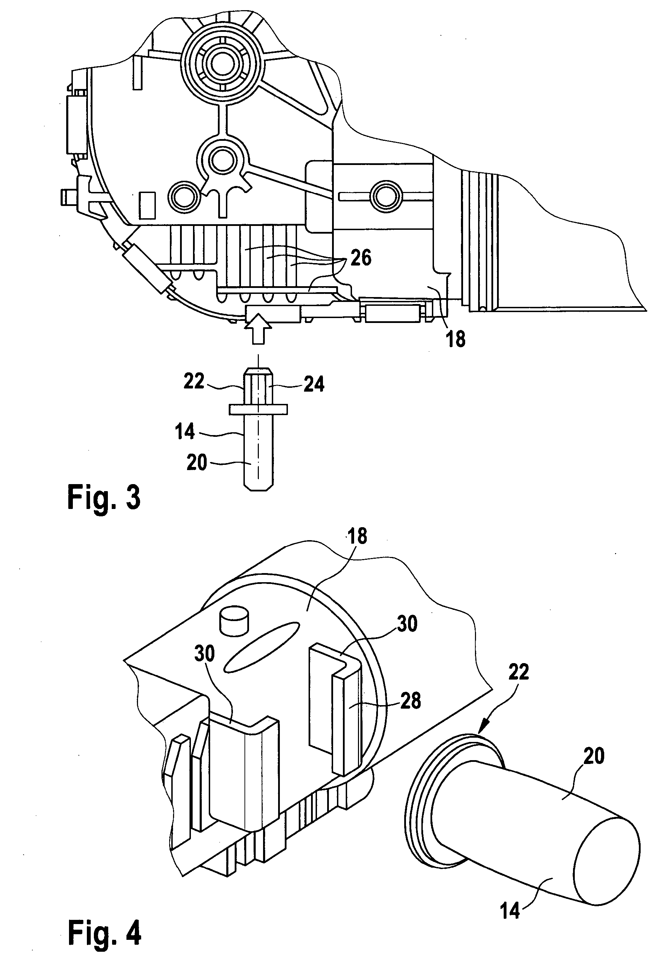

In Fig. 3 ist eine nicht zur Erfindung gehörende Ausführungsform der Befestigung eines Steckpunkts 14 an einem Getriebegehäuse 18 eines Motors einer Frontwischeranlage gezeigt. Grundsätzlich ist die Erfindung aber nicht auf Frontwischeranlagen beschränkt, sondern kann für alle Arten von Wischeranlagen verwendet werden, wie beispielsweise Heckwischeranlagen usw.. Dies gilt für alle Ausführungsformen der Erfindung und insbesondere für die nachfolgend beschriebenen Ausführungsformen.

Gemäß Fig. 3 weist der Steckpunkt 14 einen Befestigungsabschnitt 20 auf, beispielsweise in Form eines Stiftelements, mit welchem er an einem Fahrzeug befestigt wird. Des Weiteren weist der Steckpunkt 14 einen Verbindungsabschnitt 22 auf, mit welchem er mit dem Motor bzw. dem Getriebegehäuse 18 verbunden bzw. daran fixiert wird. Im vorliegenden Fall weist der Verbindungsabschnitt 22 ein Gewinde 24 auf, mit welchem der Steckpunkt 14, vergleichbar beispielsweise einer Blechschraube, durch eine Wand 26 des Getriebegehäuses 18 gebohrt bzw. geschraubt wird. Auf diese Weise kann der Steckpunkt 14 an dem Getriebegehäuse 18 zuverlässig befestigt bzw. daran fixiert werden. Die Bohrung bzw. das Gewinde 24 für den Verbindungsabschnitt 22 kann dabei an dem Getriebegehäuse 18 vorgefertigt sein oder der Verbindungsabschnitt 22 kann mit seinem Gewinde 24 in einen dünnwandigen Bereich des Getriebegehäuses 18 direkt gebohrt werden. Im vorliegenden Fall, wie er in Fig. 3 gezeigt ist, wird der Steckpunkt 14 durch eine Wand 26 des Getriebegehäuses gebohrt, die beispielsweise dünnwandig ist, z.B. eine Kühlungsrippe. Die Wände 26 des Getriebegehäuses 18 rechts und links davon, die parallel zu dem Steckpunkt 14 in eingebautem Zustand verlaufen und beispielsweise ebenfalls als Kühlungsrippen fungieren, können dabei zur zusätzlichen Abstützung für den Steckpunkt 14 dienen bzw. zur Sicherung der Steifigkeit bzw. Festigkeit der Verschraubung. Solche Kühlungsrippen dienen dazu über die umgebende Luft gekühlt zu werden. Grundsätzlich kann der Steckpunkt 14 aber auch an jeder anderen Stelle des Getriebegehäuses 18 befestigt werden. Die Befestigung an einer Kühlungsrippe, wie in Fig. 3 gezeigt ist, ist lediglich beispielhaft.

In Fig. 4 ist die erfindungsgemäße Ausführung des Steckpunktes 14 und seiner Verbindung mit dem Getriebegehäuse 18 dargestellt. Der Steckpunkt 14 besteht dabei beispielsweise aus einem Stiftelement als Befestigungsabschnitt 20 und einem beispielsweise scheibenförmigen runden oder ovalen Abschnitt bzw. einer Platine als Verbindungsabschnitt 22. Der Verbindungsabschnitt 22 und/oder der Befestigungsabschnitt 20 können hierbei beispielsweise als Blechteil gefertigt sein. An dem Getriebegehäuse 18 ist des Weiteren eine Aufnahme 28 vorgesehen, beispielsweise mit einer Führung 30 auf jeder Seite, zur Führung des Verbindungsabschnitts 22 bzw. der Platine. Die Führungen 30 werden dabei erfindungsgemäß aus jeweils einer L-Kontur gebildet, in welche der Steckpunkt 14 mit seinem Verbindungsabschnitt 22 eingeführt wird und darin verrastet. Die Platine bzw. das Blechteil kann hierbei derart ausgebildet sein, dass es sich beispielsweise in der Aufnahme 28 verkrallen kann. Die Aufnahme 28 kann dabei z.B. aus Metall, wie Aluminium bzw. einer Aluminiumlegierung usw. oder einem anderen geeigneten Material gefertigt werden.

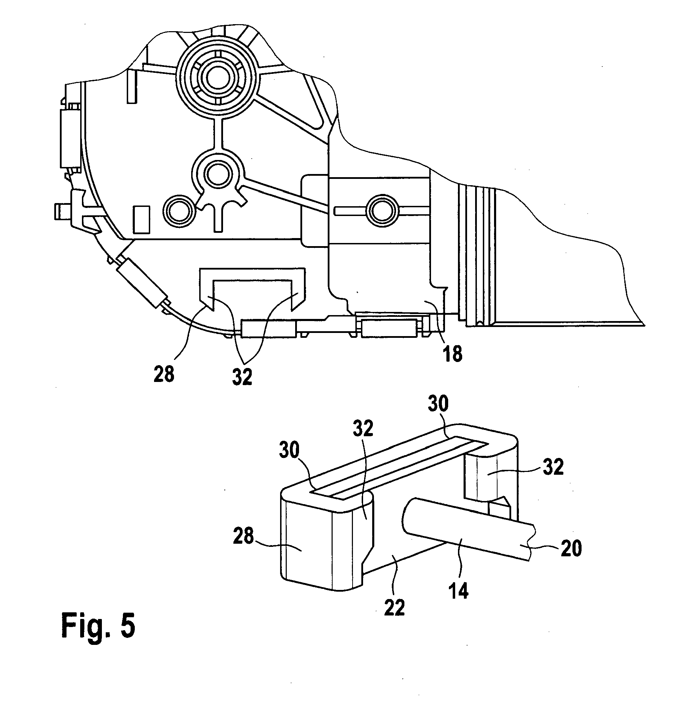

Des Weiteren ist in Fig. 5 eine weitere erfindungsgemäße Ausführungsform des Steckpunktes 14 und seiner Verbindung mit dem Getriebegehäuse 18 gezeigt. Dabei ist ein Steckpunkt 14 vorgesehen, der ein Stiftelement als Befestigungsabschnitt 20 aufweist und einen beispielsweise scheibenförmigen, quadratischen oder rechteckigen Abschnitt bzw. eine Platine als Verbindungsabschnitt 22. Zum Befestigen des Steckpunktes 14 ist an dem Getriebegehäuse 18 beispielsweise eine U-förmige Aufnahme 28 vorgesehen, in welche der Verbindungsabschnitt 22 des Steckpunkts eingeführt wird. Die Aufnahme 28 kann dabei aus einem Metall gefertigt sein, beispielsweise aus Aluminium oder einer Aluminiumlegierung oder einem anderen Material. Im vorliegenden Fall werden die Seiten 32 der U-förmigen Aufnahme 28 nach innen umgebogen, nachdem der Steckpunkt 14 eingeführt wurde, um den Steckpunkt 14 bzw. dessen Verbindungsabschnitt 22 in der Aufnahme 28 zu fixieren. Mit anderen Worten, die U-förmige Kontur, beispielsweise aus Metall, wird um den Verbindungsabschnitt 22 (beispielsweise ein Blechteil) kaltverformt.

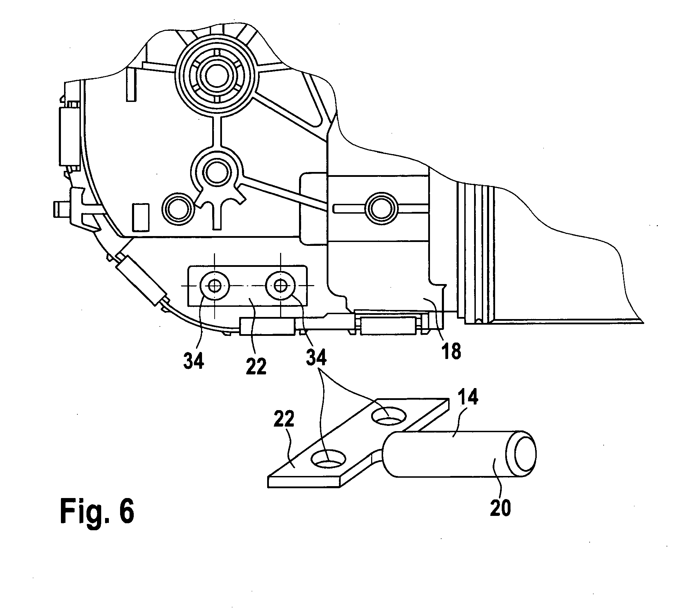

In Fig. 6 ist eine nicht zur Erfindung gehörende Ausführungsform des Steckpunktes 14 und seiner Verbindung mit dem Getriebegehäuse 18 gezeigt. Der Steckpunkt 14 weist dabei als Verbindungsabschnitt 22 beispielsweise einen Stiftabschnitt auf und als Befestigungsabschnitt 20 beispielsweise einen abgeflachten Abschnitt mit wenigstens einer oder zwei Durchführungen bzw. Bohrungen 34. Zum Befestigen an dem Getriebegehäuse 18 wird der Verbindungsabschnitt 22 beispielsweise an dieses genietet (gerollt) oder geschraubt, beispielsweise über selbstfurchende Schrauben. Grundsätzlich können die Löcher für die Schrauben auch vorgebohrt und mit einem Gewinde versehen werden. Im vorliegenden Beispiel wird der Verbindungsabschnitt 22 des Steckpunktes 14 beispielsweise auf einen Aluzylinder des Getriebegehäuses 18 genietet (gerollt).

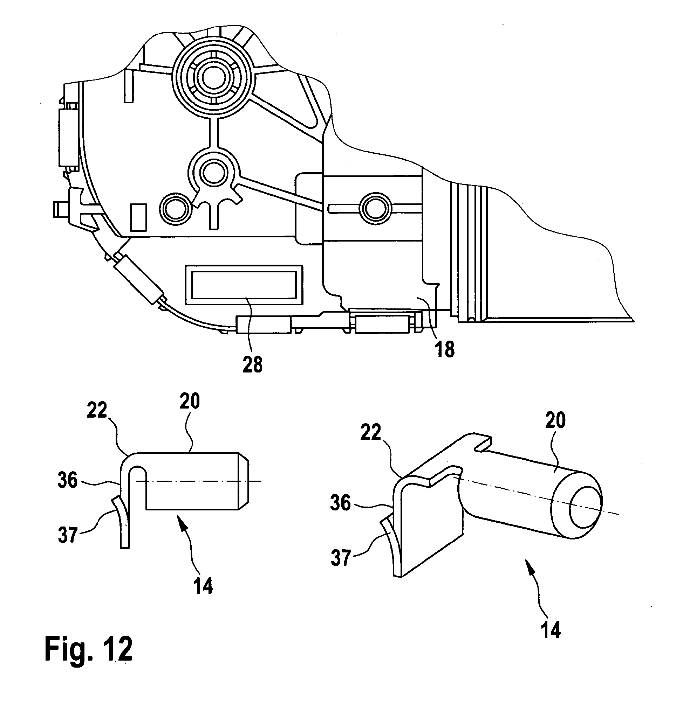

Eine andere nicht zur Erfindung gehörende Ausführungsform des Steckpunktes 14 und seiner Verbindung mit dem Getriebegehäuse 18 ist in Fig. 12 dargestellt. Dabei ist das Getriebegehäuse 18 mit einer Aufnahme 28 in Form einer Vertiefung bzw. eines Schachtes versehen. Der Steckpunkt 14 weist hierbei als Befestigungsabschnitt 20 ein Stiftelement auf. Des Weiteren ist der Verbindungsabschnitt 22 in Form eines Hakenabschnitts 36 ausgebildet, der sich in der Aufnahme 28 bzw. dem Schacht einhaken bzw. verkrallen kann. Wahlweise kann die Aufnahme 28 bzw. der Schacht mit einer Hinterschneidung versehen sein zum Einhaken.

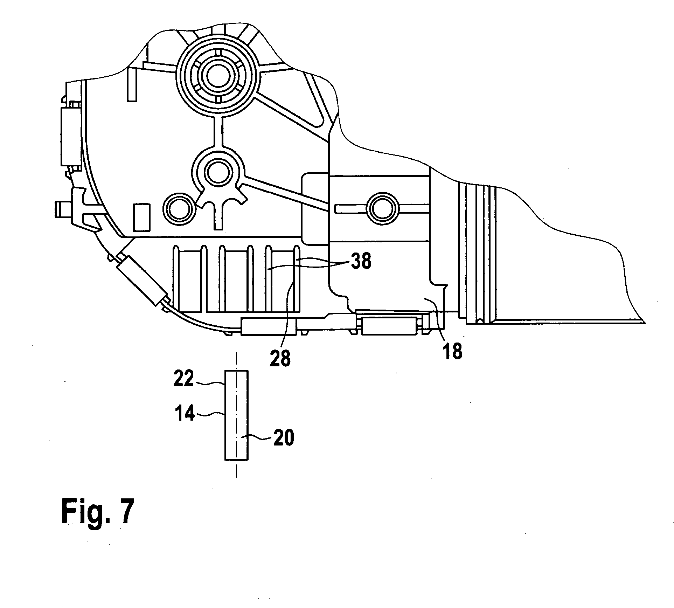

Weiter ist in den Fig. 7, 8 und 9 eine weitere nicht zur Erfindung gehörende Ausführungsform dargestellt. Hierbei wird der Steckpunkt 14 zum Befestigen an dem Getriebegehäuse 18 an einer entsprechenden Aufnahme 28 eingeklipst. Die Befestigungspunkte für den Steckpunkt 14 bzw. die Aufnahme 28 befinden sich dabei beispielsweise nur an dem Getriebegehäuse 18. Das Getriebedeckel (GD) wird hierbei beispielsweise nicht berührt. Der Steckpunkt 14 gemäß der sechsten Ausführungsform weist als Verbindungsabschnitt 22 und Befestigungsabschnitt 20 ein durchgehendes Stiftelement auf, beispielsweise mit einem kreisförmigen oder ovalen oder eckigen Durchmesser.

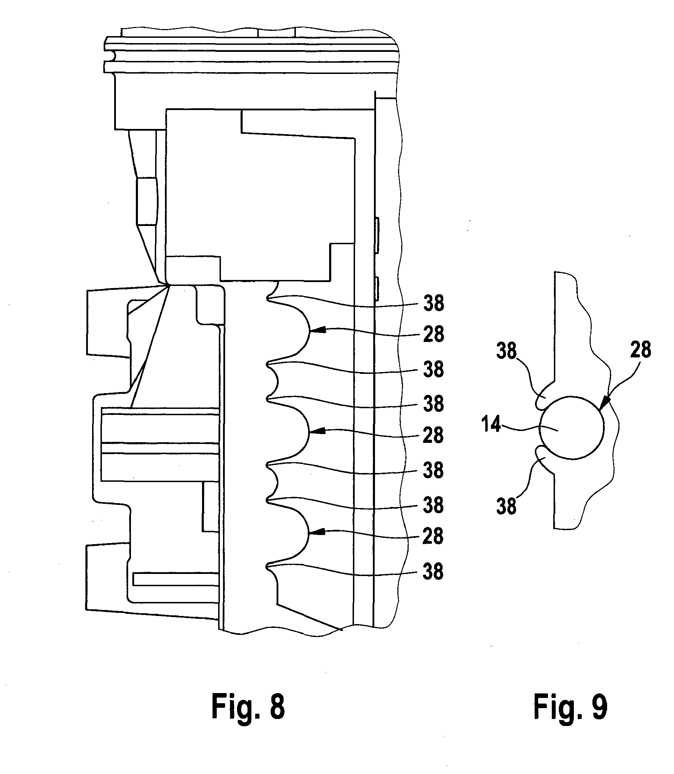

Der Steckpunkt 14 ist in Fig. 7 hierbei vor der Befestigung durch Einklipsen in die Aufnahme 28 an dem Getriebegehäuse 18 gezeigt. Fig. 8 zeigt den Steckpunkt 14 anschließend in eingebautem Zustand, wobei das Getriebegehäuse 18 hierbei in einer Seitenansicht gezeigt ist. In Fig. 9 ist die Aufnahme 28 des Getriebegehäuse 18 und der darin eingeklipste Steckpunkt 14 in einer Draufsicht gezeigt. Beim Einklipsen drückt das Stiftelement bzw. der Steckpunkt 14 die beiden Seitenränder 38 der Aufnahme 28 etwas auseinander, um in die Aufnahme 28 eingeführt und von dieser anschließend festgehalten zu werden.

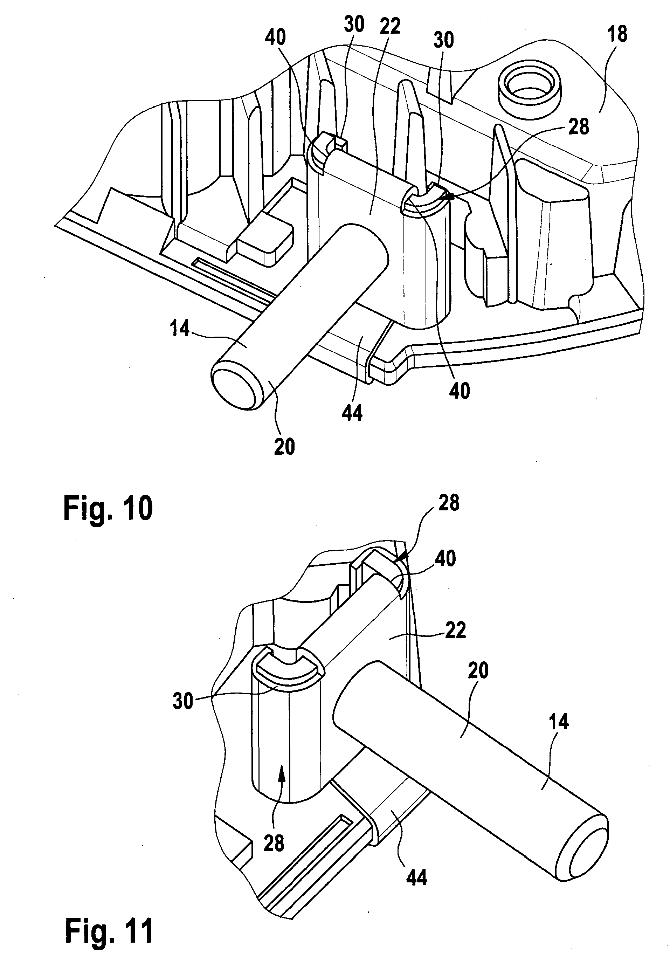

In den Fig. 10 und 11 ist darüber hinaus eine nicht beanspruchte Ausführungsform des Steckpunkts 14 und seiner Befestigung an dem Getriebegehäuse 18 gezeigt. Das Getriebegehäuse 18 weist dabei eine Rastaufnahme 42 mit einer Aufnahme mit 28 zwei Führungen 30 auf, in die der Steckpunkt 14 mit seinem Verbindungsabschnitt 22 eingeführt und eingeklipst wird. Der Steckpunkt 14 weist hierbei als Befestigungsabschnitt 20 ein Stiftelement auf und als Verbindungsabschnitt 22 einen abgeflachten Abschnitt, dessen Seitenenden 40 in die beiden Führungen 30 der Aufnahme 28 eingerastet werden. Dabei können die beiden Seitenenden 40 des abgeflachte Abschnitts U-förmig zu einer Seite gebogen sein, wie in Fig. 10 und dem vergrößerten Ausschnitt in Fig. 11 gezeigt ist. Die Rastaufnahme 42 mit dem Steckpunkt 14 wird wiederum an dem Getriebegehäuse 18 bzw. einer Wand des Getriebegehäuses eingerastet. Hierzu weist die Rastaufnahme 42 einen entsprechenden Rasthaken 44 auf, der an einer Gehäusewand des Getriebegehäuses 18 einrasten kann. Die Befestigungspunkte des Verbindungsabschnitts 22 des Steckpunktes 14 befinden sich dabei ebenfalls beispielsweise nur an dem Getriebegehäuse 18. Der Getriebedeckel (GD) wird dabei z.B. nicht berührt. Grundsätzlich können die Seitenenden 40 des abgeflachten Abschnitts des Verbindungsabschnitts 22 beispielsweise auch verdickt ausgebildet werden, um in entsprechend geformte Führungen einzurasten (nicht dargestellt).

Die in den Ausführungsformen beschriebenen Steckpunkte 14 mit ihrem Verbindungsabschnitt 22 und Befestigungsabschnitt 20 können aus einem Material oder einer Materialkombination hergestellt sein. Beispielsweise können der Verbindungsabschnitt 22 und/oder der Befestigungsabschnitt 20 aus Metall bzw. einer Metalllegierung und/oder aus Kunststoff hergestellt sein oder beispielsweise als Blechteil ausgebildet sein.

## Patentansprüche

1. Getriebegehäuse (18) für eine Wischeranlage (10), wobei das Getriebegehäuse (18) mit wenigstens einem Steckpunkt (14) versehen ist, zur Befestigung an einem Fahrzeug, wobei der Steckpunkt (14) als separates Teil an dem Getriebegehäuse (18) befestigbar ist, wobei der Steckpunkt (14) einen Verbindungsabschnitt (22) aufweist zum Verbinden des Steckpunktes (14) mit dem Getriebegehäuse (18) und einen als Stiftabschnitt gebildeten Befestigungsabschnitt (20) zum Befestigen des Steckpunktes (14) mittels Aufstecken an einem Fahrzeug, und das Getriebegehäuse (18) eine Aufnahme (28) aufweist, zur Aufnahme (28) des Verbindungsabschnitts (22) des Steckpunkts (14) **dadurch gekennzeichnet, dass** die Aufnahme (28) aus zwei L-förmigen Führungen (30) besteht oder die Aufnahme (28) U-förmig ausgebildet ist, um zwei Führungen (30) bereitzustellen, in welche der Verbindungsabschnitt (22), beispielsweise in Form einer Platine, einführbar ist.

2. Getriebegehäuse nach Anspruch 1, **dadurch gekennzeichnet, dass** der Verbindungsabschnitt (22) des Steckpunktes (14) mit einem Gewinde (24) versehen ist, um den Steckpunkt (14) in das Getriebegehäuse (18) zu schrauben.

3. Getriebegehäuse nach Anspruch 1, **dadurch gekennzeichnet, dass** der Verbindungsabschnitt (22) in die Führungen (30) einrastbar ist und/oder dass die Führungen (30) um den Verbindungsabschnitt (22) des Steckpunkts (14) angeformt bzw, angedrückt werden, um diesen in der Aufnahme (28) zu fixieren.

## Claims

1. Gear housing (18) for a wiper system (10), wherein the gear housing (18) is provided with at least one plug-in point (14), for fastening to a vehicle, wherein the plug-in point (14) is fastenable as a separate part to the gear housing (18), wherein the plug-in point (14) has a connecting section (22) for connecting the plug-in point (14) to the gear housing (18), and a fastening section (20), which is formed as a pin section, for fastening the plug-in point (14) by means of plugging the latter onto a vehicle, and the gear housing (18) has a receptacle (28) for receiving (28) the connecting section (22) of the plug-in point (14), **characterized in that** the receptacle (28) consists of two L-shaped guides (30) or the receptacle (28) is of U-shaped design in order to provide two guides (30) into which the connecting section (22), for example in the form of a plate, can be introduced.

2. Gear housing according to Claim 1, **characterized in that** the connecting section (22) of the plug-in point (14) is provided with a thread (24) in order to screw the plug-in point (14) into the gear housing (18).

3. Gear housing according to Claim 1, **characterized in that** the connecting section (22) can be latched into the guides (30), and/or **in that** the guides (30) are moulded or pressed on around the connecting section (22) of the plug-in point (14) in order to fix the latter in the receptacle (28).

## Revendications

1. Carter d'engrenage (18) pour un système d'essuie-glace (10), le carter d'engrenage (18) étant muni d'au moins un point d'emboîtement (14), pour la fixation à un véhicule, le point d'emboîtement (14) pouvant être fixé en tant que pièce séparée sur le carter d'engrenage (18), le point d'emboîtement (14) présentant une portion de connexion (22) pour la connexion du point d'emboîtement (14) au carter d'engrenage (18) et une portion de fixation (20) formée en tant que portion de goupille pour la fixation du point d'emboîtement (14) par enfichage sur un véhicule, et le carter d'engrenage (18) présentant un logement (28) pour loger (28) la portion de connexion (22) du point d'emboîtement (14), **caractérisé en ce que** le logement (28) se compose de deux guides en forme de L (30) ou le logement (28) est réalisé en forme de U afin de fournir deux guides (30) dans lesquels la portion de connexion (22), par exemple sous forme de platine, peut être introduite.

2. Carter d'engrenage selon la revendication 1, **caractérisé en ce que** la portion de connexion (22) du point d'emboîtement (14) est pourvue d'un filetage (24) afin de visser le point d'emboîtement (14) dans le carter d'engrenage (18).

3. Carter d'engrenage selon la revendication 1, **caractérisé en ce que** la portion de connexion (22) peut être encliquetée dans les guides (30) et/ou en ce que les guides (30) sont façonnés ou pressés autour de la portion de connexion (22) du point d'emboîtement (14) afin de fixer celui-ci dans le logement (28).
